# EUROPÄISCHE PATENTSCHRIFT

(11) **EP 0 906 890 B1**
(45) Veröffentlichungstag und Bekanntmachung des Hinweises auf die Patenterteilung: **04.07.2007**
(21) Anmeldenummer: 98118264.5
(22) Anmeldetag: 26.09.1998
(51) Int. Cl.: C01B 3/32, C01B 3/16, C01B 3/58, B01J 12/00, B01J 15/00, B01J 35/02, F23C 13/00, H01M 8/06

(54) **Vorrichtung zur Wasserstofferzeugung,Vorrichtung zur Kohlenmonoxid-Verringerung,Vorrichtung zur Kohlenmonoxid-Oxidation,Vorrichtung zum katalytischen Verbrennen und Verfahren zur Herstellung eines Katalysators**
Apparatus for the generation of hydrogen, apparatus for reduction of carbon monoxide content, apparatus for oxidation of carbon monoxide, apparatus for catalytic burning and method for the production of a catalyst
Dispositif de génération d'hydrogène, dispositif de réduction de la teneur en monoxyde de carbone, dispositif d'oxydation de monoxyde de carbone, dispositif pour brûler catalytiquement et méthode de production d'un catalyseur

(30) Priorität: 02.10.1997 DE 19743673
(43) Veröffentlichungstag der Anmeldung: 07.04.1999
(73) Patentinhaber: NuCellSys GmbH, 73230 Kirchheim/Teck-Nabern (DE)
(72) Erfinder: Schüssler, Martin, 89077 Ulm (DE); Stefanovski, Tomas, 71034 Böblingen (DE); zur Megede, Detlef Dr., 73230 Kirchheim/Teck (DE)
(74) Vertreter: Finkele, Rolf

(56) Entgegenhaltungen:
- EP-A- 0 303 438
- EP-A- 0 650 923
- DE-A- 3 928 790
- DE-C- 19 534 433
- GB-A- 2 188 559
- US-A- 4 771 026
- PATENT ABSTRACTS OF JAPAN vol. 007, no. 100 (C-164), 28. April 1983 & JP 58 026004 A (KANSAI NETSUKAGAKU KK), 16. Februar 1983
- PATENT ABSTRACTS OF JAPAN vol. 018, no. 506 (C-1252), 22. September 1994 & JP 06 172029 A (SUMITOMO METAL IND LTD), 21. Juni 1994
- PATENT ABSTRACTS OF JAPAN vol. 008, no. 244 (M-337), 9. November 1984 & JP 59 122807 A (MATSUSHITA DENKI SANGYO KK), 16. Juli 1984

## Beschreibung

Die vorliegende Erfindung betrifft eine Vorrichtung zur Wasserstofferzeugung aus Kohlenwasserstoffen, insbesondere Methanol, unter Zuführung eines Kohlenwasserstoff und Wasser umfassenden Reaktionsgemisches auf einen Katalysator sowie ein Verfahren zur Herstellung eines Katalysators, der insbesondere zur Verwendung in einer derartigen Vorrichtung geeignet ist. Des weiteren betrifft die vorliegende Erfindung eine Vorrichtung zur Kohlenmonoxid-Verringerung, Vorrichtung zur Kohlenmonoxid-Oxidation und eine Vorrichtung zum katalytischen Verbrennen.

Die Gewinnung von Wasserstoff aus Methanol basiert auf der Gesamtreaktion CH₃OH + H₂O → CO₂ + 3H₂. Zur Durchführung dieser Reaktion wird in der Praxis ein den Alkohol und Wasserdampf umfassendes Reaktionsgemisch unter Zufuhr von Wärme an einem geeigneten Katalysator entlanggeleitet, um in einem zwei- oder mehrstufigen Reaktionsablauf den gewünschten Wasserstoff zu erzeugen. Eine derartige Vorrichtung zur zweistufigen Methanol-Reformierung ist aus der EP 0 687 648 A1 bekannt. In der bekannten Vorrichtung wird das Reaktionsgemisch einem ersten Reaktor zugeführt, in dem nur ein Teilumsatz des Methanols angestrebt wird. Nach dem Durchströmen des ersten Reaktors wird das Gasgemisch, in welchem noch Anteile nicht umgesetzter Edukte enthalten sind, einem zweiten Reaktor zugeleitet, der restumsatzoptimiert aufgebaut ist. Die Reaktoren sind dabei als Platten- bzw. Schüttreaktoren ausgeführt, in welchen der Katalysator in Form einer Schüttung oder Beschichtung der Verteilungskanäle vorgesehen ist. Des weiteren sind Katalysatoren in Form von beschichteten Blechen, Netzen und Schäumen bekannt, die von dem Reaktionsgemisch durchströmt werden.

Aus der EP 0 217 532 B1 ist ein Verfahren zur katalytischen Erzeugung von Wasserstoff aus Gemischen von Methanol und Sauerstoff unter Verwendung eines gasdurchlässigen Katalysatorsystems bekannt, bei dem ein Wasserstoff-Generator mit einer oberen Reaktionszone und einer unteren Reaktionszone vorgesehen ist, wobei das Reaktionsgemisch von Methanol und Sauerstoff in die obere Reaktionszone eingespeist wird. Nach dem Durchströmen der oberen Reaktionszone wird das Reaktionsgemisch in die untere Reaktionszone geleitet, in welcher es durch eine spontane Einleitung der Oxidation des Methanols zu einem derartigen Anstieg der Temperatur kommt, daß eine teilweise Oxidation des Methanols in Anwesenheit eines Kupfer-Katalysators in der oberen Reaktionszone beginnt und Wasserstoff gebildet wird.

Aus der DE 195 34 433 C1 ist eine Katalysatorschichtstruktur für einen Methanol-Reformierungsreaktor und ein Verfahren zu deren Herstellung bekannt. Bei der beschriebenen Katalysatorschichtstruktur ist das Katalysatormaterial in den Poren einer verdichteten Metallschaum-Trägerschicht fixiert und dient zum Einsatz in einem Plattenreaktor.

In der Druckschrift US 4 771 026 ist ein Katalysator in Form einer Platte und ein Verfahren zu dessen Herstellung beschrieben. Bei der Herstellung wird das Katalysatormaterial mit unterschiedlichen Bindemitteln zunächst gemischt und dann verpreßt.

Ausgehend von diesem Stand der Technik liegt der Erfindung die Aufgabe zugrunde, eine jeweils gattungsgemäße Vorrichtung in möglichst einfacher und kompakter Bauweise bereitzustellen, bei der die für die Umsetzung eines bestimmten Mengenstroms an Reaktionsgemisch nötige Menge an Katalysatormaterial minimiert ist. Des weiteren ist es Aufgabe der Erfindung, ein Verfahren zur Herstellung eines Katalysators anzugeben, mit dem die genannte Minimierung an Katalysatormaterial und die einfache und kompakte Bauweise erzielt werden können.

Zur Lösung dieser Aufgabe wird eine Vorrichtung zur Wasserstofferzeugung aus Kohlenwasserstoffen mit den Merkmalen des Anspruches 1 vorgeschlagen. Zur weiteren Lösung der Aufgabe werden erfindungsgemäß eine Vorrichtung zur Kohlenmonoxid-Verringerung mit den Merkmalen des Anspruches 2, eine Vorrichtung zur Kohlenmonoxid-Oxidation mit den Merkmalen des Anspruches 3 und eine Vorrichtung zum katalytischen Verbrennen mit den Merkmalen des Anspruches 4 vorgeschlagen.

Die erfindungsgemäßen Vorrichtungen umfassen demnach jeweils einen Katalysator, der durch Verpressen von Katalysatormaterial in mindestens eine dünne und großflächige Schicht gebildet ist, wobei das Reaktionsgemisch beim Hindurchpressen durch den Katalysator einen Druckabfall von mindestens 100 mbar erfährt. Im Unterschied zu den bekannten Wasserstoffreaktoren, Wassergas-Shift-Stufen, Oxidatoren und katalytischen Brennern ist der Katalysator nicht als bloße Oberflächenstruktur ausgebildet, der von dem Reaktionsgemisch nur umströmt wird, sondern als stark komprimierte dreidimensionale Schicht, durch die das Reaktionsgemisch unter starker Druckbeaufschlagung hindurchgepresst wird. Dadurch wird eine hohe Auslastung der aktiven Katalysatorzentren und eine hohe Reaktionsgeschwindigkeit an diesen Zentren erreicht. Aufgrund des starken Druckabfalls beim Durchtritt des Reaktionsgemisches durch die erfindungsgemäße Katalysatorschicht spielen die Strömungswiderstände der Zu- und Ableitung der Edukte und Produkte der Reaktion keine große Rolle, so dass die Zu- und Ableitung der an der Reaktion beteiligten Stoffe einfach gestaltet werden kann. Durch die starke Komprimierung des Katalysatormaterials beim Verpressen wird eine sehr kompakte Katalysatorschicht erzielt, was zur Folge hat, dass der Anteil von Gasraum und nicht katalytisch wirksamen Festkörpern (wie beispielsweise Trägerbleche und dergleichen) am Gesamtvolumen und Gewicht des Reaktors gegenüber bekannten Vorrichtungen deutlich verringert ist. Vorzugsweise wird als Katalysatormaterial feinkörniges Katalysatorgranulat bzw. -pulver verwendet. Dadurch wird auch bei hohen Reaktionsgeschwindigkeiten ein guter Stoff- und Wärmetransport zu und von den inneren Bereichen der Katalysatorkörner gewährleistet. Au-ßerdem nimmt der Anteil der durchströmbaren Poren mit abnehmender Korngröße zu, d.h. die Anzahl der "Sackgassen" für die Gasdurchströmung nimmt ab. Beim Durchströmen der Schicht tritt eine starke Verwirbelung der Gase auf, wodurch die Filmdiffusionswiderstände um die Körner des Katalysatormaterials verringert werden, was zu einem verbesserten Wärmetransport durch Konvektion führt.

In Ausgestaltung der Erfindung ist die Katalysatorschicht im wesentlichen senkrecht zur Strömungsrichtung des Reaktionsgemisches angeordnet. Dadurch werden besonders kurze Wege für die Gasdurchströmung erzielt. Durch die großflächige und stark komprimierte Ausgestaltung der erfindungsgemäßen Katalysatorschicht genügt bei senkrechter Durchströmung bereits ein kurzer Weg, um unter hohem Druckabfall einen hohen Reaktionsumsatz zu erzielen.

In besonders vorteilhafter Ausgestaltung der Erfindung ist das Katalysatormaterial mit einer Trägerstruktur verpreßt, wodurch das Katalysatormaterial mechanisch stabilisiert ist und/oder eine verbesserte Wärmeleitung vorliegt. Bei der Trägerstruktur handelt es sich vorteilhafterweise um eine dreidimensionale netzartige Struktur (Matrix), die in weiterer vorteilhafter Ausgestaltung der Erfindung eine metallene Trägerstruktur ist. Als Metall wird beispielsweise Kupfer, insbesondere dendritisches Kupfer verwendet.

In vorteilhafter Ausgestaltung der Erfindung enthält das Katalysatormaterial ein Edelmetall, insbesondere Platin. Das zugesetzte Edelmetall, bei dem es sich vorzugsweise um Platin handelt, wobei jedoch auch die Verwendung anderer Edelmetalle möglich ist, reagiert bereits bei relativ niederen Betriebstemperaturen und dient somit zur Aufheizung der Katalysatoranordnung. Durch diese Maßnahme wird das Kaltstartverhalten der Katalysatoranordnung beträchtlich verbessert, was sich insbesondere bei einer Anwendung im Bereich der mobilen Wasserstofferzeugung vorteilhaft auswirkt.

In besonders vorteilhafter Weiterbildung der Erfindung sind mehrere parallel geschaltete Schichten vorgesehen. Dadurch kann die insgesamt von dem Reaktionsgemisch zu durchströmende Fläche auf mehrere nachgeordnete, jedoch parallel geschaltete Schichten verteilt werden. Diese "Modulbauweise" führt zu einem besonders kompakten Aufbau des Wasserstoffreaktors.

Zur vereinfachten Zu- und Ableitung der an der Reaktion beteiligten Stoffe sind in weiterer Ausgestaltung der Erfindung in der mindestens einen Katalysatorschicht Kanäle zum Leiten von Edukten des Reaktionsgemisches und der Reaktionsprodukte vorgesehen.

Bei der Nutzung der erfindungsgemäßen Vorrichtung erfolgt eine gegebenenfalls reaktionsbenötigte oder reaktionsfördernde Zuführung von Sauerstoff zu dem Reaktionsgemisch erst in der Ebene der mindestens einen Katalysatorschicht.

Zur weiteren Lösung der Erfindung wird ein Verfahren mit den Merkmalen des Anspruches 15 vorgeschlagen. Erfindungsgemäß wird demnach zur Herstellung eines insbesondere in einer erfindungsgemäßen Vorrichtung nach einem der Ansprüche 1 bis 4 verwendbaren Katalysators aus mindestens einem Katalysatorpulver durch Verpressen eine einen Formkörper bildende und stark komprimierte Schicht gebildet durch die ein Reaktionsgemisch unter einem Druckabfall von mindestens 100 mbar hindurchpressbar ist.

In vorteilhafter Ausgestaltung der Erfindung ist dem mindestens einen Katalysatorpulver ein Metallpulver (beispielsweise Kupfer oder dendritisches Kupfer) beigemischt.

In Ausgestaltung der Erfindung wird der Formkörper im Anschluss an das Verpressen einer Sinterung unterzogen, wodurch eine besonders gute Beständigkeit des erfindungsgemäßen Katalysators erreicht wird.

In weiterer Ausgestaltung der Erfindung werden beim Verpressen in den Formkörper Kanäle zum Leiten von Edukten und Produkten der katalytischen Reaktion eingebracht. Vorteilhafterweise werden diese Kanäle durch Einbringen von in einem nachfolgenden Verfahrensschritt wieder entfernbaren Platzhalterelementen erzeugt. Das Entfernen der Platzhalterelemente erfolgt vorteilhafterweise durch Verbrennen, Pyrolysieren, Lösen oder Verdampfen.

In weiterer vorteilhafter Ausgestaltung der Erfindung wird auf einem bereits gesinterten Formkörper eine weitere Pulverschicht aufgepreßt und anschließend gesintert. Dadurch kann in mehrstufiger Herstellung in einer Art Sandwichstruktur ein Katalysator mit mehreren übereinanderliegenden Schichten hergestellt werden, die durch Einbringen geeigneter Kanäle parallel verschaltet sind. Dadurch kann das gesamte von dem Reaktionsgemisch zu durchfließende Katalysatorvolumen auf eine kleinere Querschnittsfläche aufgeteilt und trotzdem das Konzept des hohen Druckabfalls über einen kleinen Strömungsweg beibehalten werden.

Die Erfindung ist anhand von Ausführungsbeispielen in der Zeichnung schematisch dargestellt und wird im folgenden unter Bezugnahme auf die Zeichnung ausführlich beschrieben.
- Figur 1: veranschaulicht in stark schematischer Darstellung die Funktionsweise einer erfindungsgemäßen Katalysatorschicht.
- Figur 2: zeigt in perspektivischer Darstellung eine erfindungsgemäße stapelförmige Anordnung parallel geschalteter Katalysatorschichten.
- Figur 3: zeigt in perspektivischer Darstellung ein weiteres Ausführungsbeispiel einer einzelnen erfindungsgemäßen Katalysatorschicht.

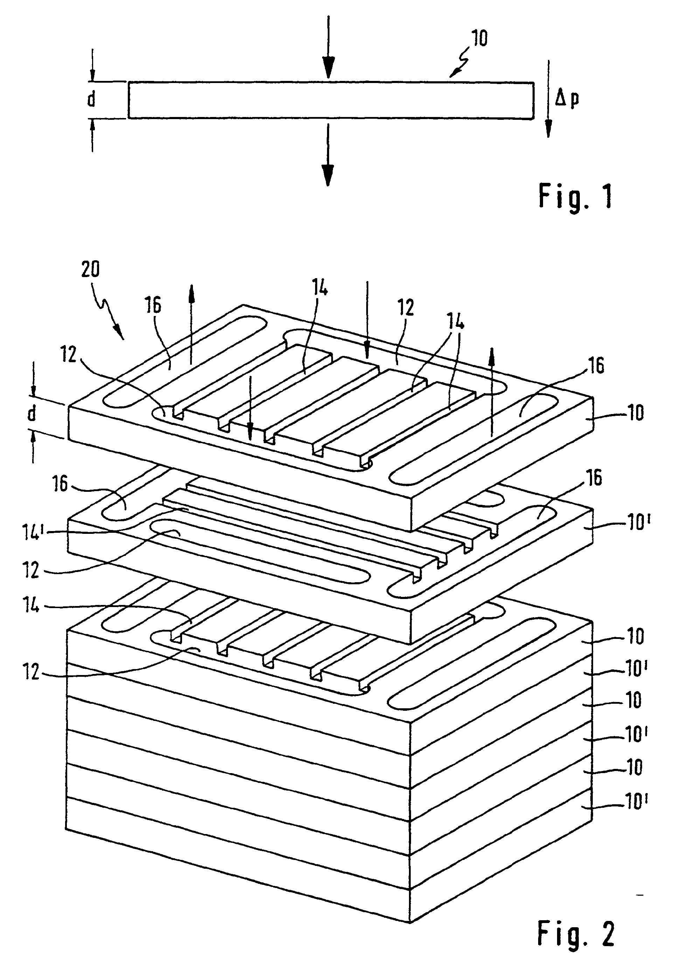

Figur 1 zeigt schematisch in seitlicher Ansicht eine erfindungsgemäße Katalysatorschicht 10, die durch Verpressen von Katalysatormaterial in eine dünne und großflächige, stark komprimierte Schicht gebildet ist. Die Schicht 10 bildet einen Formkörper mit einer Dicke d, die beispielsweise 1 mm beträgt. Als Katalysatormaterial wird ein feinkörniges Katalysatorpulver oder -granulat verwendet, dessen Körner einen Durchmesser von ca. 0,5 mm oder kleiner haben. Das Verpressen erfolgt beispielsweise bei Temperaturen von ca. 200° bis 500°C.

Die dargestellte Katalysatorschicht 10 ist Bestandteil einer nicht näher dargestellten Vorrichtung zur Wasserstofferzeugung, wobei die Edukte des Reaktionsgemisches unter Druckbeaufschlagung im wesentlichen senkrecht zu der Katalysatorschicht 10 auf diese zugeführt und durch sie hindurchgepreßt werden. Beim Durchströmen der Katalysatorschicht 10 erfährt das Reaktionsgemisch einen Druckabfall Δp von ca. 100 mbar und mehr (beispielsweise 1 bis 4 bar). Auf der gegenüberliegenden Seite der Katalysatorschicht 10 treten die katalytischen Reaktionsprodukte im Sinne des eingezeichneten Pfeiles aus.

Um dem Katalysatormaterial eine bessere mechanische Stabilität und/oder verbesserte Wärmeleitung zu verleihen, wird das Katalysatormaterial in eine Trägerstruktur verpreßt. Bei dieser Trägerstruktur handelt es sich vorteilhafterweise um eine netzartige Matrix, die durch Vermischen des mindestens einen Katalysatorpulvers mit einem Metallpulver und Verpressen dieses Gemisches erhalten wird. Beim Verpressen bildet das Metallpulver (insbesondere Kupfer oder dendritisches Kupfer) eine netzartige Matrixstruktur, in welche die Katalysatorkörner "eingebaut" sind. Besonders geeignet als Ausgangsmaterial für die metallene Matrix sind dendritische Kupferpulver, die sich auch bei einem relativ geringen Massenanteil des Kupferpulvers zur Gesamtmasse der Schicht leicht zu einem Netz zusammenpressen bzw. versintern lassen, eine große Oberfläche haben und selber katalytisch aktiv sind. Durch die Verwendung von dendritischem Kupferpulver wird deshalb ein stabilisierendes, fixierendes und wärmeverteilendes Netz im Mikrometer-Bereich erhalten. Als Trägerstruktur sind jedoch auch nicht-metallene Materialien wie beispielsweise Kohlenstoff denkbar.

Die Katalysatorschicht 10 weist eine relativ große Fläche von beispielsweise 100 cm² auf. Um eine kompaktere Bauweise zu erreichen, wird das von dem Reaktionsgemisch zu durchfließende Katalysatorvolumen auf mehrere Schichten aufgeteilt, die jedoch nicht nebeneinander, sondern hintereinander, aber parallel geschaltet angeordnet sind. Eine derartige Anordnung ist in Figur 2 dargestellt und zeigt einen eine Vielzahl von aufeinanderliegenden Katalysatorschichten 10, 10' umfassenden Stapel 20, wobei die in der Zeichnung oben liegenden Schichten zur besseren Veranschaulichung der Wirkungsweise beabstandet zueinander dargestellt sind.

Die Katalysatorschichten 10 weisen Kanäle 12, 14, 14' 16 zum Leiten von Edukten und Produkten der katalytischen Reaktion auf. In dem in Figur 2 dargestellten Ausführungsbeispiel sind in der Katalysatorschicht im wesentlichen parallel zu den Längskanten verlaufende Eduktkanäle 12 vorgesehen, die senkrecht zur Flächenebene der Katalysatorschicht durchgehende Führungskanäle bilden, wobei die Eduktkanäle 12 übereinanderliegender Katalysatorschichten 10, 10' im wesentlichen deckungsgleich zueinander angeordnet sind und somit einen durch den gesamten Stapel 20 von oben nach unten durchgehenden Führungskanal für die Edukte des Reaktionsgemisches bilden. Je nach Verwendung der Stapelanordnung wird durch die Eduktkanäle 12 ein spezifisches Reaktionsgemisch geleitet. Im Falle der Verwendung als Wasserstoffreaktor umfaßt das Reaktionsgemisch Alkohol, insbesondere Methanol, sowie chemisch gebundenen Wasserstoff, vorteilhafterweise in Form von Wasser. Im Falle der Verwendung des Stapels 20 in einer sogenannten H₂-Shift-Reaktion zur Verringerung von Kohlenmonoxid unter Freisetzung von Kohlendioxid umfaßt das Reaktionsgemisch Kohlenmonoxid und Wasserstoff. Im Falle des Einsatzes im Bereich der Kohlenmonoxid-Oxidation umfaßt das Reaktionsgemisch ein CO-haltiges Gas sowie ein O₂-haltiges Gas. Bei der Verwendung des Katalysatorstapels 20 in einem katalytischen Brenner umfaßt das Reaktionsgemisch ein brennbares Edukt sowie ein O₂-haltiges Gas.

Die Eduktkanäle 12 jeder zweiten Katalysatorschicht 10 stehen mit im wesentlichen parallel zur Flächenausdehnung der Katalysatorschicht 10 verlaufenden Verteilungskanälen 14 in Verbindung, die wenigstens einen Teil des durch die Eduktkanäle 12 - eintretenden Reaktionsgemisches in das Innere der Katalysatorschicht 10 ableiten.

Erfindungsgemäß wird demnach jeweils ein Teil des durch die Eduktkanäle 12 eintretenden und durch den Stapel 20 geführten Reaktionsgemisches in jeder zweiten Schichtenebene durch die Verteilungskanäle 14 in das Innere der beiden angrenzenden Katalysatorschichten 10, 10' abgeleitet, wodurch eine Parallelschaltung der übereinanderliegend angeordneten Katalysatorschichten erreicht wird.

In dem in der Figur 2 dargestellten Ausführungsbeispiel sind wie beschrieben pro Katalysatorschicht 10, 10' zwei räumlich getrennte Eduktkanäle 12 vorgesehen. Dies kann dazu genutzt werden, um verschiedene Stoffe des Reaktionsgemisches getrennt voneinander zuzuführen, so daß einzelne Bestandteile des Reaktionsgemisches erst in der Ebene der Katalysatorschicht 10 zusammenkommen.

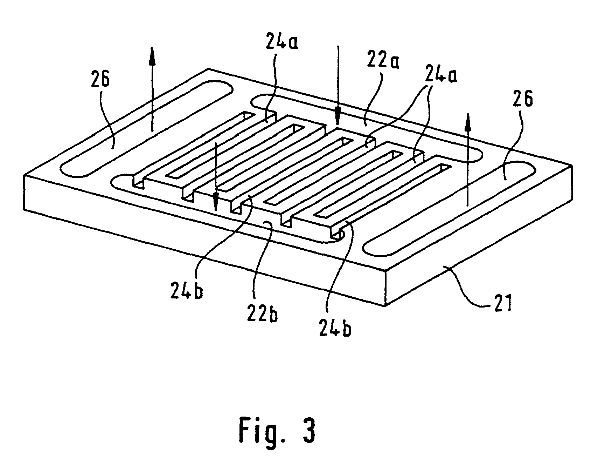

Vorteilhafterweise wird hierzu eine Katalysatorschicht mit einer Kanalstruktur eingesetzt, wie sie in dem Ausführungsbeispiel der Figur 3 dargestellt ist. Die in Figur 3 gezeigte Katalysatorschicht 21 weist Eduktkanäle 22a, 22b und Produktkanäle 26 auf, die in ihrer Funktion prinzipiell den in Zusammenhang mit der Figur 2 beschriebenen Edukt- und Produktkanälen 12 und 16 entsprechen. Abweichend von der in Figur 2 dargestellten Katalysatorschicht 10 stehen die zwei räumlich getrennt voneinander angeordneten Eduktkanäle 22a, 22b durch die Verteilungskanäle nicht miteinander in Verbindung, sondern die von jedem der Eduktkanäle 22a, 22b ausgehenden Verteilungskanäle 24a bzw. 24b erstrecken sich quer über die Katalysatorschicht 21, enden jedoch, bevor sie den gegenüberliegenden Eduktkanal 22b bzw. 22a erreichen. Dadurch wird eine Anordnung von alternierend ineinandergreifenden Kanälen geschaffen, was zur separaten Zuführung eines (weiteren) Gases, das zur Reaktion benötigt wird oder diese unterstützt, genutzt werden kann. Wird im Beispieldes Methanol-Reformers durch den einen Eduktkanal, beispielsweise den Eduktkanal 22a, eine Mischung aus Methanol und Wasserdampf zugeführt, so kann durch den entsprechend anderen Eduktkanal 22b Sauerstoff (Luft) zugeführt werden. Über die dem jeweiligen Eduktkanal zugeordneten Verteilungskanäle 24a, 24b werden die zugeleiteten Stoffe in der Katalysatorschicht 21 verteilt und treten erst in der Schicht selbst miteinander in Kontakt. Dadurch wird eine besonders homogene und sichere (Explosionsgefahr) Verteilung und Vermischung der Edukte erreicht. Selbstverständlich sind auch andere als die dargestellte Ausführungsformen mit nur einem Eduktkanal oder auch mehr als zwei Eduktkanälen möglich.

Entlang der Querkanten der Katalysatorschichten 10, 10' sind analog zu den Eduktkanälen 12 ausgebildete Produktkanäle 16 angeordnet, die ebenfalls im wesentlichen senkrecht zur Flächenausdehnung jeder Katalysatorschicht 10 verlaufende Führungskanäle bilden, die bei übereinandergelegten Katalysatorschichten 10 jeweils deckungsgleich mit den Produktkanälen der darüber bzw. darunterliegenden Katalysatorschicht 10, 10' zum Liegen kommen. Die Produktkanäle 16 jeder zweiten Katalysatorschicht 10' stehen mit Sammelkanälen 14' in Verbindung, die das aus der jeweils darüber- und darunterliegenden Katalysatorschicht 10, 10' austretende Reaktionsprodukt sammeln und in Querrichtung den Produktkanälen 16 zuführen, mittels welcher die Reaktionsprodukte durch den Stapel 20 abgeleitet werden.

In der dargestellten Ausführungsform einer erfindungsgemäßen Vorrichtung zur Wasserstofferzeugung verfügen die übereinandergelegten Katalysatorschichten 10, 10' also über jeweils alternierende Funktionsweisen; in den Katalysatorschichten 10 werden die durch die Eduktkanäle 12 zugeführten Edukte verteilt und über Verteilungskanäle 14 über die Fläche der darüber- und darunterliegenden Katalysatorschicht verteilt, wo sie diese im wesentlichen senkrecht und unter einem beträchtlichen Druckabfall durchströmen. In der jeweils folgenden Katalysatorschicht 10' werden die Produkte der katalytischen Reaktion in Sammelkanälen 14' gesammelt und den Produktkanälen 16 zum Abführen der Reaktionsprodukte aus dem Katalysatorstapel 20 zugeführt.

Natürlich ist die Erfindung nicht auf die dargestellte und beschriebene Ausführungsform beschränkt. Vielmehr sind auch Ausführungsformen denkbar, in welchen jede Katalysatorschicht das Zuführen, Verteilen, Sammeln und Abführen der Edukte bzw. Produkte übernimmt. Derartige komplexere Katalysatorschichten können beispielsweise durch Aufpressen und Sintern von pulverförmigen Katalysatormaterial auf bereits gesinterte Katalysatorschichten hergestellt werden.

Erfindungsgemäß werden somit Katalysatorschichten bereitgestellt, die einfach und in kompakter Weise herstellbar und zur Verwendung in Wasserstoffreaktoren zur katalytischen Wasserstofferzeugung, Wasserstoff-Shift-Stufen zur CO-Verringerung, Kohlenmonoxid-Oxidatoren sowie katalytischen Brennern geeignet sind. Durch die erfindungsgemäße Ausgestaltung des Katalysators wird eine modulare Bauweise ermöglicht, bei dem nur geringe thermische Verluste und keine großen Temperaturgradienten auftreten, wodurch eine über ein großes Volumen homogen ablaufende Reaktion ermöglicht wird. Das gesamte Katalysatorvolumen ist räumlich mit Edukten erreichbar, was zu einer deutlich verbesserten Startdynamik führt. Darüber hinaus wird die Gefahr der Zündung der homogenen Verbrennung von Methanol oder der Knallgasreaktion vermieden.

Durch geeignete Wahl der Prozeßparameter (Preßdruck, Temperatur, Art und Beschaffenheit der Ausgangsmaterialien wie Korngrößenverteilung, Porösität etc.) kann der Fachmann eine auf die jeweiligen Anforderungen zugeschnittene und bezüglich Schichtfolge, Wärmeverteilung, Strömungsverhältnisse und mechanische Eigenschaften wie Druckabfall und Stabilität optimierte erfindungsgemäße Katalysatorschicht bzw. Katalysatorschichtenanordnung erzeugen.

## Patentansprüche

1. Vorrichtung zur Wasserstofferzeugung unter Zuführung eines chemisch gebundenen Wasserstoff enthaltenden Brennmittels, insbesondere Methanol, und Wasser umfassenden Reaktionsgemisches auf einen Katalysator,
**dadurch gekennzeichnet, dass**
der Katalysator mindestens eine durch Verpressen und Sinterung von Katalysatormaterial gebildete dünne und großflächige Schicht (10, 10'; 21) ist, wobei das Reaktionsgemisch beim Hindurchpressen durch den Katalysator einen Druckabfall (Δp) erfährt.

2. Vorrichtung zur Kohlenmonoxid-Verringerung unter Zuführung eines Kohlenmonoxid und Wasserstoff umfassenden Reaktionsgemisches auf einen Katalysator,
**dadurch gekennzeichnet, dass**
der Katalysator mindestens eine durch Verpressen und Sinterung von Katalysatormaterial gebildete dünne und großflächige Schicht (10, 10'; 21) ist, wobei das Reaktionsgemisch beim Hindurchpressen durch den Katalysator einen Druckabfall (Δp) erfährt.

3. Vorrichtung zur Kohlenmonoxid-Oxidation unter Zuführung eines Kohlenmonoxid und Sauerstoff umfassenden Reaktionsgemisches auf einen Katalysator,
**dadurch gekennzeichnet, dass**
der Katalysator mindestens eine durch Verpressen und Sinterung von Katalysatormaterial gebildete dünne und großflächige Schicht (10, 10'; 21) ist, wobei das Reaktionsgemisch beim Hindurchpressen durch den Katalysator einen Druckabfall (Δp) erfährt.

4. Vorrichtung zum katalytischen Verbrennen eines brennbaren Eduktes unter Zuführung eines das brennbare Edukt und sauerstoffhaltiges Gas umfassenden Reaktionsgemisches auf einen Katalysator,
**dadurch gekennzeichnet, dass**
der Katalysator mindestens eine durch Verpressen und Sinterung von Katalysatormaterial gebildete dünne und großflächige Schicht (10, 10'; 21) ist, wobei das Reaktionsgemisch beim Hindurchpressen durch den Katalysator einen Druckabfall (Δp) erfährt.

5. Vorrichtung nach einem der Ansprüche 1 bis 4,
**dadurch gekennzeichnet, dass**
die Schicht (10, 10'; 21) im Wesentlichen senkrecht zur Strömungsrichtung des Reaktionsgemisches angeordnet ist.

6. Vorrichtung nach einem der Ansprüche 1 bis 5,
**dadurch gekennzeichnet, dass**
das Katalysatormaterial mit einer Trägerstruktur verpresst ist.

7. Vorrichtung nach Anspruch 6,
**dadurch gekennzeichnet, dass**
die Trägerstruktur eine netzartige metallene Trägerstruktur ist.

8. Vorrichtung nach Anspruch 7,
**dadurch gekennzeichnet, dass**
die netzartige Trägerstruktur aus Kupfer ist.

9. Vorrichtung nach Anspruch 8,
**dadurch gekennzeichnet, dass**
die netzartige Trägerstruktur aus dendritischem Kupfer ist.

10. Vorrichtung nach einem der vorstehenden Ansprüche,
**dadurch gekennzeichnet, dass**
das Katalysatormaterial ein Edelmetall, insbesondere Platin, enthält.

11. Vorrichtung nach einem der vorstehenden Ansprüche,
**dadurch gekennzeichnet,**
**dass** mehrere parallel geschaltete Schichten (10, 10'; 21) vorgesehen sind.

12. Vorrichtung nach einem der vorstehenden Ansprüche,
**dadurch gekennzeichnet, dass**
in der mindestens einen Schicht (10, 10'; 21) Kanäle (12, 14, 14', 16; 22a, 22b, 24a, 24b, 26) zum Leiten von Edukten des Reaktionsgemisches und der Reaktionsprodukte vorgesehen sind.

13. Verfahren zur Nutzung einer Vorrichtung nach einem der Ansprüche 1 bis 12,
**dadurch gekennzeichnet, dass**
eine Zuführung von Sauerstoff getrennt von den übrigen Edukten erfolgt.

14. Verfahren nach Anspruch 13,
**dadurch gekennzeichnet, dass**
ein Zusammenführen und Mischen des Sauerstoffs mit den übrigen Edukten erst in der Schicht (10, 21) erfolgt.

15. Verfahren zur Herstellung eines Katalysators, insbesondere für eine Vorrichtung nach einem der Ansprüche 1 bis 12, bei dem aus mindestens einem Katalysatorpulver durch Verpressen und anschließender Sinterung eine einen Formkörper bildende dünne und stark komprimierte Schicht (10, 10') gebildet wird, durch die ein Reaktionsgemisch unter einem Druckabfall hindurchpressbar ist.

16. Verfahren nach Anspruch 15, bei dem dem mindestens einen Katalysatorpulver ein Metallpulver beigemischt ist.

17. Verfahren nach Anspruch 16, bei dem das Metallpulver Kupferpulver ist.

18. Verfahren nach Anspruch 17, bei dem das Metallpulver aus dendritischem Kupfer ist.

19. Verfahren nach einem der Ansprüche 15 bis 18, bei dem beim Verpressen in den Formkörper Kanäle (12, 14, 14', 16; 22a, 22b, 24a, 24b, 26) zum Leiten von Edukten und Produkten der katalytischen Reaktion eingebracht werden.

20. Verfahren nach Anspruch 19, bei dem die Kanäle (12, 14, 14', 16; 22a, 22b, 24a, 24b, 26) durch Einbringen von in einem nachfolgenden Verfahrensschritt wieder entfernbaren Platzhalterelementen erzeugt werden.

21. Verfahren nach Anspruch 20, bei dem die Platzhalterelemente durch Verbrennen, Pyrolysieren, Lösen oder Verdampfen entfernt werden.

22. Verfahren nach einem der Ansprüche 15 bis 21, bei dem auf einen bereits gesinterten Formkörper eine weitere Pulverschicht aufgepresst und anschließend gesintert wird.

## Claims

1. Apparatus for hydrogen production with a fuel in particular methanol, which contains chemically bonded hydrogen, and a reaction mixture with water being supplied to a catalytic converter,
**characterized in that**
the catalytic converter is at least one thin and large-area layer (10, 10'; 21) which is formed by pressing and sintering of catalytic-converter material, with the reaction mixture experiencing a pressure drop (Δp) when being pressed through the catalytic converter.

2. Apparatus for carbon-monoxide reduction with a reaction mixture comprising carbon monoxide and hydrogen being supplied to a catalytic converter,
**characterized in that**
the catalytic converter is at least one thin and large-area layer (10, 10'; 21) which is formed by pressing and sintering of catalytic-converter material, with the reaction mixture experiencing a pressure drop (Δp) when being pressed through the catalytic converter.

3. Apparatus for carbon-monoxide oxidation with a reaction mixture which comprises carbon monoxide and oxygen being supplied to a catalytic converter,
**characterized in that**
the catalytic converter is at least one thin and large-area layer (10, 10'; 21) which is formed by pressing and sintering of catalytic-converter material, with the reaction mixture experiencing a pressure drop (Δp) when being pressed through the catalytic converter.

4. Apparatus for catalytic combustion of a combustible reactant with a reaction mixture, which comprises the combustible reactant and gas containing oxygen being supplied to a catalytic converter,
**characterized in that**
the catalytic converter is at least one thin and large-area layer (10, 10'; 21) which is formed by pressing and sintering of catalytic-converter material, with the reaction mixture experiencing a pressure drop (Δp) when being pressed through the catalytic converter.

5. Apparatus according to one of Claims 1 to 4,
**characterized in that**
the layer (10, 10'; 21) is arranged essentially at right angles to the flow direction of the reaction mixture.

6. Apparatus according to one of Claims 1 to 5,
**characterized in that**
the catalytic-converter material is pressed with a supporting structure.

7. Apparatus according to Claim 6,
**characterized in that**
the supporting structure is a mesh-like metallic supporting structure.

8. Apparatus according to Claim 7,
**characterized in that**
the mesh-like supporting structure is composed of copper.

9. Apparatus according to Claim 8,
**characterized in that**
the mesh-like supporting structure is composed of dendritic copper.

10. Apparatus according to one of the preceding claims,
**characterized in that**
the catalytic-converter material contains a noble metal, in particular platinum.

11. Apparatus according to one of the preceding claims,
**characterized in that**
a plurality of parallel-connected layers (10, 10'; 21) are provided.

12. Apparatus according to one of the preceding claims,
**characterized in that**
channels (12, 14, 14', 16; 22a, 22b, 24a, 24b, 26) for carrying reactants of the reaction mixture and the reaction products are provided in the at least one layer (10, 10'; 21).

13. Method for use of an apparatus according to one of Claims 1 to 12,
**characterized in that**
oxygen is supplied separately from the other reactants.

14. Method according to Claim 13,
**characterized in that**
the oxygen is combined and mixed with the other reactants only in the layer (10, 21).

15. Method for production of a catalytic converter, in particular for an apparatus according to one of Claims 1 to 12, in which a thin and highly compressed layer (10, 10') which forms a moulding is formed from at least one catalytic-converter powder by pressing and subsequent sintering, through which layer (10, 10') a reaction mixture can be pressed subject to a pressure drop.

16. Method according to Claim 15, in which a metal powder is added to the at least one catalytic-converter powder.

17. Method according to Claim 16, in which the metal powder is copper powder.

18. Method according to Claim 17, in which the metal powder is composed of dendritic copper.

19. Method according to one of Claims 15 to 18, in which channels (12, 14, 14', 16; 22a, 22b, 24a, 24b, 26) for carrying reactants and products of the catalytic reaction are introduced into the moulding during pressing.

20. Method according to Claim 19, in which the channels (12, 14, 14', 16; 22a, 22b, 24a, 24b, 26) are produced by introduction of space-keeper elements, which can be removed again in a subsequent method step.

21. Method according to Claim 20, in which the space-keeper elements are removed by combustion, pyrolysis, dissolving or vaporization.

22. Method according to one of Claims 15 to 21, in which a further powder layer is pressed onto an already sintered moulding, and is then sintered.

## Revendications

1. Dispositif de production d'hydrogène en apportant à un catalyseur un mélange réactif comprenant de l'eau et un combustible contenant de l'hydrogène chimiquement lié, méthanol notamment,
**caractérisé en ce que** le catalyseur consiste en au moins une couche (10, 10' ; 21) mince et de grande surface formée par compression et frittage de matériau catalyseur, sachant que le mélange réactif subit une chute de pression (Δp) lorsqu'il est pressé à travers le catalyseur.

2. Dispositif de réduction de la teneur en monoxyde de carbone en apportant à un catalyseur un mélange réactif comprenant du monoxyde de carbone et de l'hydrogène,
**caractérisé en ce que** le catalyseur consiste en au moins une couche (10, 10' ; 21) mince et de grande surface formée par compression et frittage de matériau catalyseur, sachant que le mélange réactif subit une chute de pression (Δp) lorsqu'il est pressé à travers le catalyseur.

3. Dispositif d'oxydation de monoxyde de carbone en apportant à un catalyseur un mélange réactif comprenant du monoxyde de carbone et de l'hydrogène,
**caractérisé en ce que** le catalyseur consiste en au moins une couche (10, 10' ; 21) mince et de grande surface formée par compression et frittage de matériau catalyseur, sachant que le mélange réactif subit une chute de pression (Δp) lorsqu'il est pressé à travers le catalyseur.

4. Dispositif pour brûler catalytiquement un éduit combustible en apportant à un catalyseur un mélange réactif comprenant l'éduit combustible et un gaz contenant de l'oxygène,
**caractérisé en ce que** le catalyseur consiste en au moins une couche (10, 10' ; 21) mince et de grande surface formée par compression et frittage de matériau catalyseur, sachant que le mélange réactif subit une chute de pression (Δp) lorsqu'il est pressé à travers le catalyseur.

5. Dispositif selon l'une quelconque des revendications 1 à 4, **caractérisé en ce que** la couche (10, 10' ; 21) est disposée essentiellement perpendiculairement à la direction d'écoulement du mélange réactif.

6. Dispositif selon l'une quelconque des revendications 1 à 5, **caractérisé en ce que** le matériau catalyseur est comprimé avec une structure porteuse.

7. Dispositif selon la revendication 6, **caractérisé en ce que** la structure porteuse est une structure porteuse métallique réticulée.

8. Dispositif selon la revendication 7, **caractérisé en ce que** la structure porteuse réticulée est en cuivre.

9. Dispositif selon la revendication 8, **caractérisé en ce que** la structure porteuse réticulée est en cuivre dendritique.

10. Dispositif selon l'une quelconque des revendications précédentes, **caractérisé en ce que** le matériau catalyseur contient un métal précieux, en particulier du platine.

11. Dispositif selon l'une quelconque des revendications précédentes, **caractérisé en ce qu'**il est prévu plusieurs couches (10, 10' ; 21) reliées en parallèle.

12. Dispositif selon l'une quelconque des revendications précédentes, **caractérisé en ce que** des canaux (12, 14, 14', 16 ; 22a, 22b, 24a, 24b, 26) sont prévus dans la couche au moins unique (10, 10'; 21) pour diriger les éduits du mélange réactif et les produits de réaction.

13. Procédé pour l'utilisation d'un dispositif selon l'une quelconque des revendications 1 à 12, **caractérisé en ce que** l'apport d'oxygène s'effectue séparément des autres éduits.

14. Procédé selon la revendication 13, **caractérisé en ce que** la réunion et le mélange de l'oxygène avec les autres éduits s'effectue seulement dans la couche (10, 21).

15. Procédé de fabrication d'un catalyseur, en particulier pour un dispositif selon l'une quelconque des revendications 1 à 12, selon lequel une couche mince et fortement comprimée (10, 10'), constituant un corps façonné à travers lequel un mélange réactif peut être pressé en subissant une chute de pression, est formée à partir d'au moins une poudre de catalyseur par compression suivie d'un frittage.

16. Procédé selon la revendication 15, selon lequel une poudre métallique est ajoutée à la poudre de catalyseur au moins unique.

17. Procédé selon la revendication 16, selon lequel la poudre métallique est de la poudre de cuivre.

18. Procédé selon la revendication 17, selon lequel la poudre métallique est en cuivre dendritique.

19. Procédé selon l'une quelconque des revendications 15 à 18, selon lequel des canaux (12, 14, 14', 16 ; 22a, 22b, 24a, 24b, 26) sont ménagés dans le corps façonné pour diriger les éduits et les produits de la réaction catalytique.

20. Procédé selon la revendication 19, selon lequel les canaux (12, 14, 14', 16 ; 22a, 22b, 24a, 24b, 26) sont produits par mise en place d'éléments formant des emplacements, qui peuvent être enlevés lors d'une étape suivante du procédé.

21. Procédé selon la revendication 20, selon lequel les éléments formant des emplacements sont enlevés par combustion, pyrolyse, dissolution ou vaporisation.

22. Procédé selon l'une quelconque des revendications 15 à 21, selon lequel une couche de poudre supplémentaire est pressée puis frittée sur un corps façonné déjà fritté.
